# EUROPÄISCHE PATENTSCHRIFT

(11) **EP 1 257 954 B1**
(45) Veröffentlichungstag und Bekanntmachung des Hinweises auf die Patenterteilung: **27.03.2013**
(21) Anmeldenummer: 01913589.6
(22) Anmeldetag: 07.02.2001
(51) Int. Cl.: G06Q 10/00, G06Q 10/08, B07C 3/00

(54) **VERFAHREN ZUM VERTEILEN VON SENDUNGEN**
METHOD FOR DISTRIBUTING POSTAL OBJECTS
PROCEDE DE DISTRIBUTION D'ENVOIS POSTAUX

(30) Priorität: 21.02.2000 DE 10007897
(43) Veröffentlichungstag der Anmeldung: 20.11.2002
(73) Patentinhaber: Siemens Aktiengesellschaft, 80333 München (DE)
(72) Erfinder: BLÄSCHE, Dietrich, 78224 Singen (DE)
(86) Internationale Anmeldenummer: PCT/DE2001/000474
(87) Internationale Veröffentlichungsnummer: WO 2001/063496

(56) Entgegenhaltungen:
- EP-A- 0 500 180
- EP-A- 0 673 686
- WO-A-99/21330

## Beschreibung

Die Erfindung betrifft ein Verfahren zum Verteilen von Sendungen nach dem Oberbegriff des Anspruches 1.

Der normale Prozeß bei der Postbearbeitung nach dem Stand der Technik erfolgt in mindestens zwei Sortierschritten. Die Sendungen werden nach der Übergabe des Absenders an die Post im sogenannten Abgangssortierzentrum von einer automatischen Leseeinrichtung gescannt, gelesen und dann so sortiert, daß sie an das entsprechende Eingangssortierzentrum geschickt werden können. Dort (oder z.T. nochmals im Zustellstützpunkt) werden die Sendungen feiner sortiert, so daß jedem Zusteller die von ihm zuzustellenden Sendungen übergeben werden können.

Ist ein Empfänger verzogen (oder temporär an einem anderen Aufenthaltsort), kann er seine Post dorthin umleiten lassen. Dieses Nachsenden ist ein seit langem bekanntes Problem. Trotzdem wird noch ein großer Teil der Sendungen manuell nachgesandt. Beim manuellen Nachsenden kommen die Sendungen mit der falschen (alten) Adresse zum Zusteller des alten Bezirkes. Für die Sortierung der Sendungen in die Gangfolge benutzt der Zusteller einen Verteilspind, dessen Fachzahl gleich der maximalen Zahl der Zustellpunkte in seinem Zustellbezirk entspricht. Wenn ein Nachsendeantrag gestellt wird, wird dem Zusteller des alten Bezirks eine Nachsendemerkkarte mit der neuen Adresse zugesandt.

Die Nachsendemerkkarte wird in das entsprechende Fach gelegt. Während der Gangfolgesortierung werden nachzusendende Sendungen in Fächer mit Nachsendemerkkarten nicht einsortiert. Stattdessen schreibt der Zusteller die neue Adresse auf den Umschlag und übergibt die Sendung der manuellen Bearbeitung. In Systemen, die weiterentwickelt sind, identifiziert der Zusteller nachzusendende Briefe, nimmt sie aus dem Briefstrom heraus und schickt sie an ein zentrales Bearbeitungszentrum für nachzusendende Briefe. Mit Hilfe von Extraktionstechniken gibt das Bedienpersonal die ungültige Adresse in einen Computer ein, der an eine zentrale Datenbank angeschlossen ist. Die Datenbank enthält Informationen über alle Nachsendeanträge und zeigt sowohl die neue Adresse als auch eine Namensliste mit Personen, die Nachsendeanträge gestellt haben, auf dem Bildschirm an. Das Bedienpersonal sucht den auf dem Briefumschlag angegebenen Namen in der Liste. Sobald dies geschehen ist, wird ein neues Label mit der neuen Adresse entweder automatisch oder manuell appliziert. Das Label wird dabei so positioniert, daß der alte Barcode abgedeckt ist. Dadurch kann der Brief mit den restlichen Sendungen wieder automatisch gelesen und codiert werden. Der Nachteil dieses Verfahrens ist der hohe manuelle Aufwand für die Bearbeitung und die Abtrennung von nachzusendenden Sendungen aus dem normalen Briefstrom. Dies hat Verzögerungen und Umwege für nachzusendende Sendungen zur Folge. (Computer Forwarding System II der USPS).

Systeme, die noch höher entwickelt sind, benutzen OCR-Technologie. In diesem Falle werden nachzusendende Sendungen wieder vom Zusteller abgefangen, mit Stempeln, wie "Verzogen, Adresse unbekannt" versehen und an ein automatisches Nachsendezentrum geschickt. Das Nachsendezentrum ist mit Anschriftenlesern ausgestattet, die für alle nachzusendenden Sendungen automatisch die Empfänger- und Absenderadresse erkennen. Mit Hilfe einer Nachsendedatenbank wird die neue Adresse bestimmt. Der Anschriftenleser kann alle Zustellervermerke, Vorausverfügungen und sonstige Merkmale lesen und auswerten. Die Auswertung der Merkmale erlaubt die Entscheidung, wie mit den Sendungen weiter zu verfahren ist. In einem weiteren Automationsschritt wird auf die Sendung ein Label mit der neuen Adresse aufgebracht. Nachdem auch der Barcode aufgedruckt wurde, wird die Sendung wieder in den regulären Briefstrom für die Zustellung eingeschleust.

In der US-PS 5 422 821 wird ein System zur Weiterleitung inkorrekt adressierter Sendungen beschrieben, das nachzusendende Sendungen in einer früheren Stufe der Briefbearbeitung erkennt und zwischen maschinenlesbaren und maschinenunlesbaren Sendungen unterscheidet.

Nach Aufnahme eines Bildes von der Adreßseite der Sendung einschließlich der Digitalisierung erfolgt das Lesen von Namen und Adresse des Empfängers mittels OCR-Leser. Danach wird in einer USPS Zip+4 Datenbasis der ZIP-Code des Verteilpunktes festgelegt. Anschließend wird in einer USPS National Change of Address (NCOA) Datenbasis ermittelt, ob eingetragene Weiterleitungsanforderungen vorhanden sind. Gleichzeitig werden auch auf den Sendungen befindliche Weiterleitungsaufschriften automatisch ausgewertet. Während der Zeit des Ermittelns der richtigen Adresse befinden sich die Sendungen in einer mechanischen Verzögerungsstrecke/Zwischenspeicher.

Kann die Adresse einschließlich ZIP+4 Code in der Zeit, in der sich die jeweilige Sendung in der Verzögerungsstrecke befindet, nicht automatisch ermittelt werden, so werden die Bilder mit einer Identifikationsnummer abgespeichert. Anschließend wird diese ID-Nr. als Barcode auf die Sendung aufgedruckt und die Weiterverarbeitung erfolgt offline mit Hilfe der Videocodierung in der oben beschriebenen Art, wobei diese Sendungen aus dem Sendungsstrom ausgeschleust und in einem speziellen Sortierfach gesammelt werden. Wird die richtige Adresse während der Verweilzeit der jeweiligen Sendung in der Verzögerungsstrecke ermittelt, so wird ein Label auf die falsche Adresse appliziert, auf das die neue Adresse gedruckt wird. Ein Barcode-Sorter verteilt die Sendungen dann gemäß des aufgedruckten neuen Barcodes. Dieser Vorgang läuft online ab.

Der im Anspruch 1 angegebenen Erfindung liegt die Aufgabe zugrunde, den Transport- und Sortieraufwand für die Sendungen zu verringern, deren Empfänger eine Umleitungsverfügung ausgelöst haben.

Die Sendungen, zu denen Umleitungsverfügungen, die in einer entsprechenden Umleitungsdatenbank abgespeichert sind, vorliegen, werden nicht sofort zugestellt, sondern in einem Speicher unter einer Kennung, die der Verfügungsauslöser beim Aufgeben der Umleitungsverfügung erhält, und einer laufenden Nummer gelagert.

Wurde also in der Umleitungsdatenbank mit den gelesenen Empfängerangaben ermittelt, daß eine Umleitungsverfügung vorliegt, werden dem Verfügungsauslöser Informationen über eingegangene Sendungen zugänglich gemacht. Auf der Basis dieser Informationen teilt der Verfügungsauslöser dem Versanddienst elektronisch unter Angabe der Kennung und der laufenden Nummer/n mit, an welche Zustelladresse, die Sendung/en unter zeitlichen Bedingungen zu senden sind und/oder ob bei Briefsendungen Informationen zum Sendungsinhalt elektronisch zugänglich zu machen sind.

Entsprechend der Anforderung werden die gewünschten Sendungen aus dem Speicher unter Verwendung der Kennung und der laufenden Nummer entnommen und an die gewählte Zustelladresse verschickt. Bei angeforderten Informationen zum Sendungsinhalt werden die ausgewählten Sendungen geöffnet, die Inhalte abgescannt und elektronisch dem Verfügungsauslöser zugänglich gemacht. Werden die Sendungen noch zusätzlich physikalisch angefordert, werden die geöffneten Umschläge wieder verschlossen oder es erfolgt eine Neukuvertierung mit Angabe der gewählten Zustelleradresse. Mit diesem Verfahren ist es also möglich, den Umleitungsprozeß so zu gestalten, daß die Sendungen je nach Anforderung durch den Verfügungsauslöser an die gewählte Adresse verteilt werden und bei Beschränkung auf elektronische Informationen, ein Versand der entsprechenden Sendungen nicht mehr notwendig ist.

Vorteilhafte Ausgestaltungen der Erfindung sind in den Unteransprüchen dargestellt.

In einer vorteilhaften Ausgestaltung ruft der Verfügungsauslöser elektronisch unter seiner Kennung Informationen beim Versanddienst ab, ob Sendungen für ihn eingegangen sind.

In einer anderen vorteilhaften Ausgestaltung wird der Verfügungsauslöser vom Versanddienst elektronisch benachrichtigt, daß eine oder mehrere Sendungen für ihn eingegangen sind.

Um dem Verfügungsauslöser möglichst zeitig Informationen zu den Sendungen zukommen zu lassen, ist es vorteilhaft, bei einer in der Umleitungsdatenbank gefundenen Verfügung zusätzlich die Absenderangaben zu lesen und im Falle des erfolgreichen Lesens diese Angaben und im Falle des nicht erfolgreichen Lesens die gespeicherten Abbilder der Sendungsoberflächen mit den Adressen in die Informationen über die eingegangenen Sendungen aufzunehmen.

In einer weiteren vorteilhaften Ausgestaltung werden auch physikalische Eigenschaften der Sendungen, wie z.B. Abmessungen, Gewicht und Sendungskategorien, wie Eilsendungen, Einschreiben detektiert und in die elektronisch zur Verfügung gestellten Informationen zu den eingegangenen Sendungen aufgenommen.

Anschließend wird die Erfindung anhand der Zeichnung an einem Ausführungsbeispiel näher erläutert.

Dabei zeigen
- FIG 1: eine schematische Darstellung des Ablaufes zur Erzeugung einer elektronischen Information an einen verzogenen Empfänger,

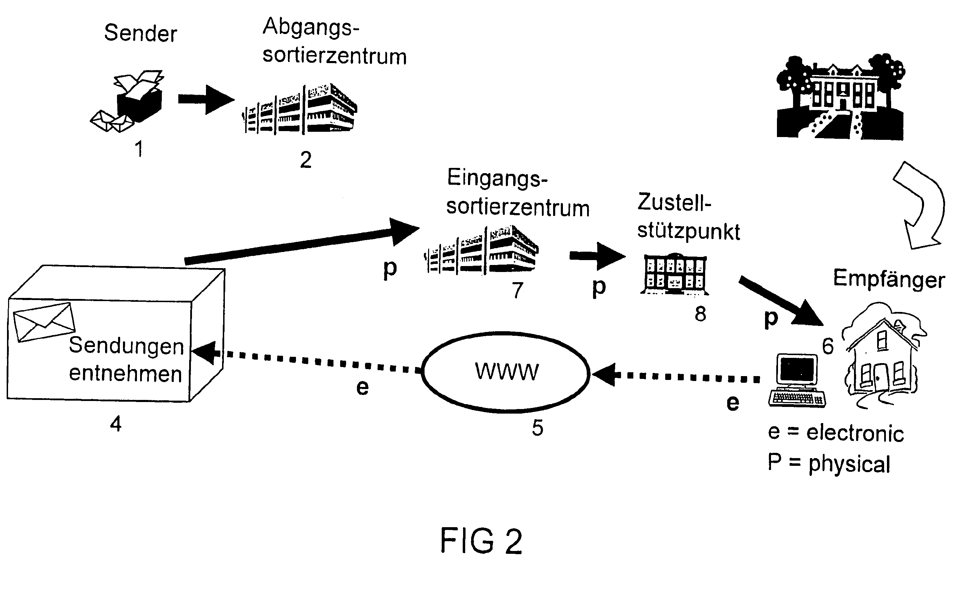

- FIG 2: eine schematische Darstellung der elektronischen Anforderung des Empfängers und der ausgelösten Lieferung der Sendung,
- FIG 3: eine schematische Darstellung der elektronischen Anforderung des Empfängers und der ausgelösten elektronischen Übermittlung des abgescannten Sendungsinhaltes,
- FIG 4: ein Flußbild der Verfahrensschritte.

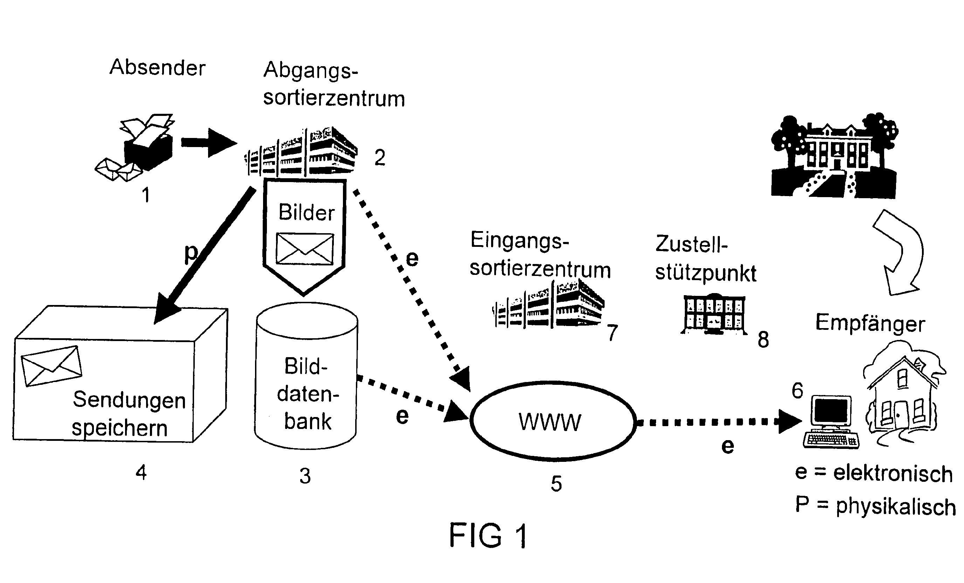

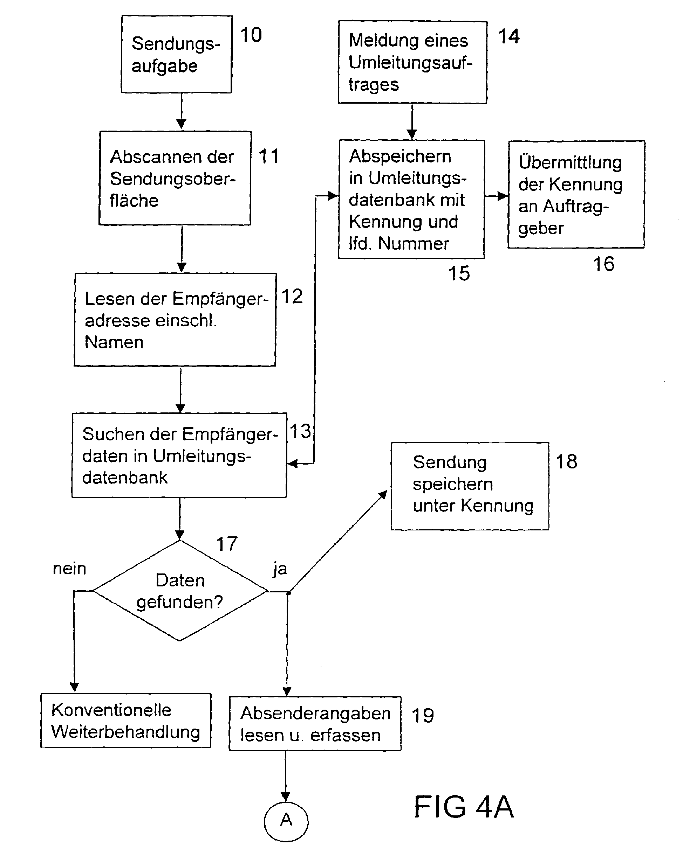

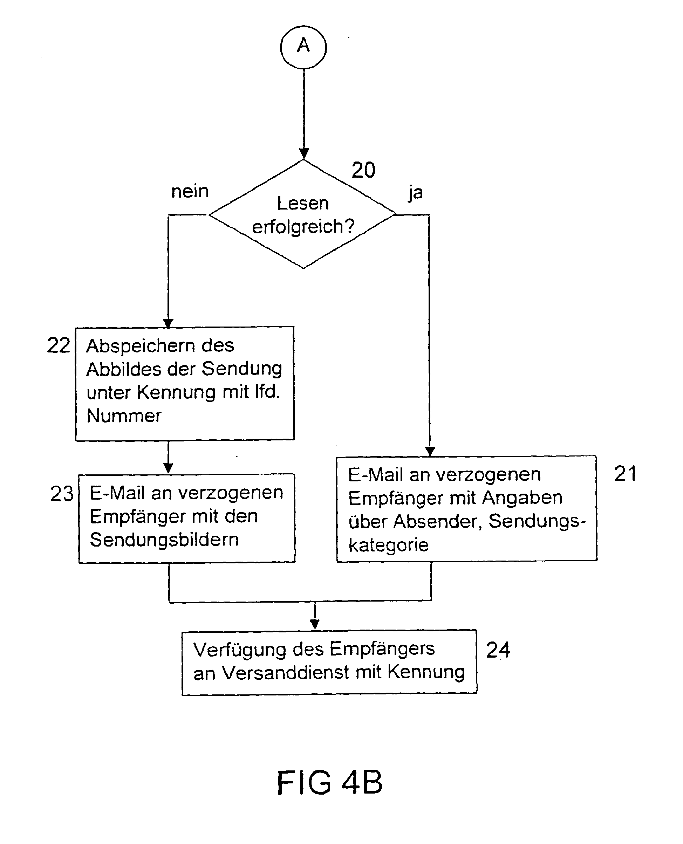

Wie den FIG 1 und 4 zu entnehmen, werden die Sendungen 1 des Absenders aufgegeben 10 und im Abgangssortierzentrum 2 erfolgt dann das Abscannen der Sendungsoberfläche 11, das Lesen der Empfängeradresse 12 und das Suchen in einer Umleitungsdatenbank 13, ob unter dem gelesenen Namen und der Adresse des Empfängers eine Umleitungsverfügung vorliegt, die von ihm dem Versanddienst gemeldet wurde 14, weil er zeitlich befristet unter einer anderen Zustelladresse erreichbar ist oder weil er gerade umgezogen ist oder weil er einfach Vorinformationen über eingegangene Sendungen haben möchte. Diese Umleitungsverfügung (Namen, alte Adresse, neue Adresse/n, Zeitraum) wird in der Umleitungsdatenbank unter einer Kennung gespeichert, die dem Verfügungsauslöser/Empfänger mitgeteilt wird 16. Wurde zu dem gelesenen Empfänger eine entsprechende Verfügung ermittelt 17, so erfolgt ein Speichern der Sendung unter der Kennung 18 und einer laufenden Nummer in einem Sendungsspeicher 4 und die Absenderangaben werden gelesen und erfaßt 19. Optional werden noch Sendungseigenschaften, wie Abmessungen, Gewicht, Sendungsklasse ermittelt.

War das Lesen der Absenderangaben erfolgreich 20, so wird eine elektronische Nachricht an die Empfangsstation 6 des verzogenen Verfügungsauslösers/Empfängers über ein entsprechendes Medium 5 geschickt 21, in der mitgeteilt wird, daß n Sendungen unter Angabe des Absenders und evtl. weiterer Sendungseigenschaften eingegangen sind. Konnten die Absenderangaben nicht eindeutig gelesen werden, so werden die Abbilder der eingegangenen Sendungen in einer Bilddatenbank 3 unter der Kennung und einer laufenden Nummer gespeichert 22 und mit der elektronischen Nachricht an den Verfügungsauslöser/Empfänger geschickt 23. In einer zusätzlichen Variante erhält der Verfügungsauslöser/Empfänger Zugriff zur Bilddatenbank 3. Es ist auch ein Verfahrensablauf möglich, bei dem der Verfügungsauslöser/Empfänger selbständig unter seiner Kennung beim Versanddienst Informationen elektronisch abruft, ob Sendungen für ihn eingegangen sind.

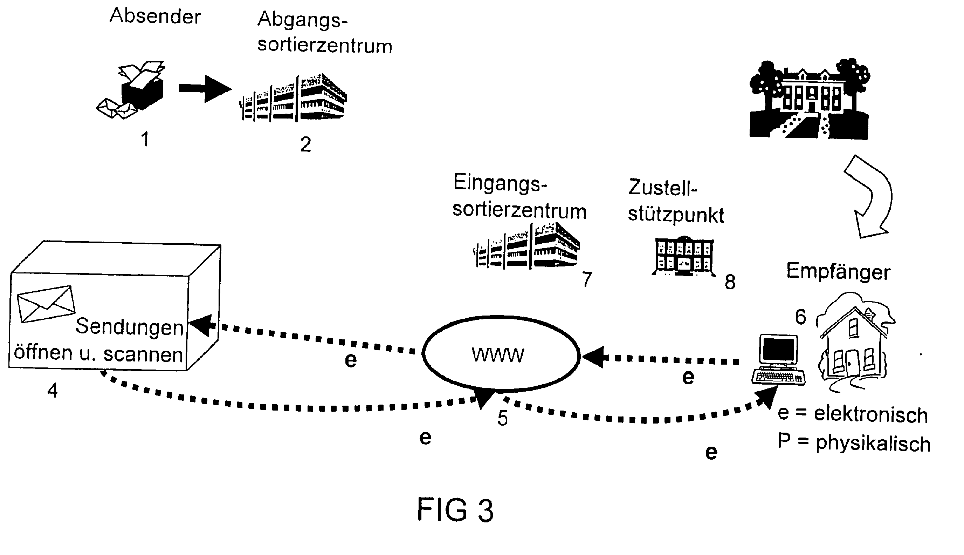

Anhand der Angaben zu den Sendungen, der Absenderangaben oder der Bilder entscheidet der Verfügungsauslöser/Empfänger dann, welche Sendungen er an welche Zustelladresse geschickt haben möchte, und teilt dies elektronisch dem Versanddienst mit der Kennung mit 24. Daraufhin werden die Sendungen dem Sendungsspeicher 4 entnommen und über das der neuen Zustelladresse zugeordnete Eingangssortierzentrum 7 und den betreffenden Zustellstützpunkt 8 an den Empfänger versandt (FIG 3).

Hat der Verfügungsauslöser/Empfänger dem Versanddienst mitgeteilt, daß er für bestimmte Briefsendungen den Inhalt elektronisch übermittelt haben möchte, so werden die Sendungen dem Sendungsspeicher 4 entnommen und geöffnet. Dann wird der Inhalt abgescannt und elektronisch über das entsprechende Medium 5 als E-Mail an den Verfügungsauslöser/Empfänger geschickt (FIG 4). Danach entscheidet der Verfügungsauslöser/Empfänger, ob die Originalsendungen wieder verschlossen bzw. neu kuvertiert und nachgeschickt werden (entweder an die neue Zustellanschrift oder an die alte Adresse), oder ob sie zu vernichten sind. Auch hier besteht in einer zusätzlichen Variante für den Verfügungsauslöser/Empfänger die Möglichkeit, die Inhaltsinformationen beim Versanddienst abzurufen.

## Patentansprüche

1. Verfahren zum Verteilen von Sendungen, bei dem nach der Sendungsaufgabe die mit den Adressen versehenen Sendungsoberflächen abgescannt, die Empfängerangaben gelesen werden und die ermittelten Empfängerdaten in einer Umleitungsdatenbank, in der Umleitungsverfügungen unter Angabe von Namen, Zustelladressen gespeichert sind, gesucht werden, **dadurch gekennzeichnet, daß** der Verfügungsauslöser eine Kennung erhält, die auch suchbarer Bestandteil der gespeicherten Umleitungsverfügung ist, daß bei einer gefundenen Umleitungsverfügung
- die Sendungen unter der jeweiligen Kennung und einer lfd. Nr. gespeichert werden,
- dem Verfügungsauslöser vom Versanddienst Informationen über eingegangene Sendungen elektronisch zugänglich gemacht werden,
- der Verfügungsauslöser elektronisch unter Angabe der Kennung und der lfd. Nr. dem Versanddienst mitteilt, an welche Zustelladresse die Sendung/en unter zeitlichen Bedingungen zu senden sind und/oder ob bei Briefsendungen Informationen zum Sendungsinhalt elektronisch zugänglich zu machen sind,
- die angeforderten Sendungen aus dem Speicher unter Verwendung der Kennung und der lfd. Nr. entnommen und in den Versandprozess wieder eingegliedert werden, wobei auf die Sendungen ein maschinenlesbarer Kode für die gewählte Zustelladresse aufgebracht wird,
- und bei angeforderten Informationen zum Sendungsinhalt die gespeicherten Sendungen geöffnet, die Inhalte abgescannt, dem Verfügungsauslöser elektronisch zugänglich gemacht sowie bei zusätzlich angefordertem physikalischen Versand die Sendungen wieder verschlossen oder neu kuvertiert und mit der gewählten Zustelladresse versehen werden.

2. Verfahren nach Anspruch 1, **dadurch gekennzeichnet, daß** der Verfügungsauslöser elektronisch mit seiner Kennung als Zugangsberechtigung Informationen beim Versanddienst abruft, ob Sendungen für ihn eingegangen sind.

3. Verfahren nach Anspruch 1, **dadurch gekennzeichnet, daß** der Verfügungsauslöser vom Versanddienst elektronisch benachrichtigt wird, daß eine oder mehrere Sendungen für ihn eingegangen sind.

4. Verfahren nach Anspruch 1, **dadurch gekennzeichnet, daß** bei einer in der Umleitungsdatenbank ermittelten Nachsendeverfügung auch die Absenderangaben gelesen werden, im Falle des erfolgreichen Lesens die Absenderdaten und im Falle des erfolglosen Lesens die in einer Datenbank gespeicherten Abbilder der betreffenden eingegangenen Sendungen in die Informationen über die eingegangenen Sendungen aufgenommen werden.

5. Verfahren nach Anspruch 1, **dadurch gekennzeichnet, daß** physikalische Eigenschaften der Sendungen und Sendungskategorien detektiert und zusätzlich an den Empfänger elektronisch übermittelt werden.

## Claims

1. Method for distributing mail items, in which the mailing task is taken as a basis for scanning the mail surfaces provided with the addresses, reading the recipient details and searching for the ascertained recipient data in a redirection database which stores redirection rules by specifying names and delivery addresses, **characterized in that** the rule trigger is provided with an identifier which is also a searchable part of the stored redirection rule, and **in that** when a redirection rule is found
- the mail items are stored under the respective identifier and a serial number,
- information about mail items received is made electronically available to the rule trigger by the dispatch service,
- the rule trigger electronically notifies the dispatch service, by specifying the identifier and the serial number, of the delivery address to which the mail item(s) is/are to be sent under time conditions and/or whether information regarding the mail content needs to be made electronically available in the case of mail items sent by letter,
- the requested mail items are removed from the memory by using the identifier and the serial number and are incorporated into the dispatch process again, with a machine-readable code for the selected delivery address being put onto the mail items,
- and if information is requested regarding the mail content then the stored mail items are opened, the contents are scanned and are made electronically available to the rule trigger, and if physical dispatch is additionally required then the mail items are sealed again or put into a new envelope and provided with the selected delivery address.

2. Method according to Claim 1, **characterized in that** the rule trigger uses its identifier as access authorization to electronically retrieve information from the dispatch service regarding whether mail items have been received for it.

3. Method according to Claim 1, **characterized in that** the rule trigger is electronically informed by the dispatch service that one or more mail items have been received for it.

4. Method according to Claim 1, **characterized in that** if a forwarding rule is ascertained in the redirection database then the sender details are also read, and the sender data are included in the information about the received mail items if reading is successful, and the images of the relevant received mail items that are stored in a database are included in the information about the received mail items if reading is unsuccessful.

5. Method according to Claim 1, **characterized in that** physical properties of the mail items and mail categories are detected and additionally electronically transmitted to the recipient.

## Revendications

1. Procédé de distribution d'envois, dans lequel on scanne suivant la destination de l'envoi les surfaces des envois munies des adresses, on lit les indications de destinataires et on recherche les données de destinataires déterminées dans une base de données de faire suivre, dans laquelle des instructions de faire suivre sont mémorisées avec indication de noms et d'adresses de destination, **caractérisé en ce que** le déclencheur d'instructions reçoit une caractérisation, qui est aussi une partie constitutive pouvant être recherchée de l'instruction de faire suivre mémorisée, **en ce que** pour une instruction de faire suivre trouvée,
- les envois sont stockés sous la caractérisation respective et un numéro lfd,
- des informations sur des envois arrivés sont rendues accessibles électroniquement au déclencheur d'instructions par le service d'expédition,
- le déclencheur d'instructions fait part électroniquement au service d'expédition, avec indication de la caractérisation et du numéro lfd, de l'adresse de destination à laquelle l'envoi ou les envois doivent être envoyés dans des conditions de temps et/ou si, pour des envois de lettres, les informations sur le contenu de l'envoi doivent être rendues accessibles électroniquement,
- les envois demandés sont prélevés du stockage en utilisant la caractérisation et le numéro lfd et sont réintégrés dans l'opération d'expédition, un code lisible par une machine pour l'adresse de destination sélectionnée étant apposé sur les envois,
- et pour des informations demandées du contenu de l'envoi, les envois stockés sont ouverts, leur contenu est scanné et rendu accessible électroniquement au déclencheur d'instructions ainsi que, lorsqu'une expédition physique est demandée supplémentairement, les envois sont refermés ou remis sous enveloppe et sont munis de l'adresse de destination sélectionnée.

2. Procédé suivant la revendication 1, **caractérisé en ce que** le déclencheur d'instructions appelle électroniquement, par sa caractérisation comme justification d'accès, des informations auprès du service d'expédition sur le point de savoir si des envois qui lui sont destinés sont arrivés.

3. Procédé suivant la revendication 1, **caractérisé en ce que** le déclencheur d'instructions est notifié électroniquement par le service d'expédition qu'un envoi ou plusieurs envois qui lui sont destinés sont arrivés.

4. Procédé suivant la revendication 1, **caractérisé en ce que**, pour une instruction de réexpédition déterminée dans la base de données de faire suivre, les indications d'expéditeurs sont lues également, dans le cas de la lecture couronnée de succès, les données d'expéditeurs et dans le cas de la lecture infructueuse les reproductions, mémorisées dans la base de données, des envois arrivés concernés sont enregistrées dans les informations sur les envois arrivés.

5. Procédé suivant la revendication 1, **caractérisé en ce que** des propriétés physiques des envois et des catégories d'envois sont détectées et sont transmises électroniquement supplémentairement aux destinataires.
